# FASCICULE DE BREVET EUROPEEN

(11) **EP 0 419 748 B1**
(45) Date de publication et mention de la délivrance du brevet: **17.11.1994**
(21) Numéro de dépôt: 89420369.4
(22) Date de dépôt: 28.09.1989
(51) Int. Cl.: H02G 1/12

(54) **Outil combiné pour couper et dénuder les extrémités de conducteurs électriques revêtus d'une gaine isolante**
Kombiniertes Werkzeug zum Schneiden und Abisolieren von Enden von elektrischen Kabeln, welche in einem isolierenden Mantel eingeschlossen sind
Combination tool for cutting and stripping the ends of electric leads covered with an insulating sleeve

(43) Date de publication de la demande: 03.04.1991
(73) Titulaire: Laurencot, André, F-25110 Baume les Dames (FR)
(72) Inventeur: Laurencot, André, F-25110 Baume les Dames (FR)
(74) Mandataire: Ropital-Bonvarlet, Claude

(56) Documents cités:
- CH-A- 552 900
- DE-A- 1 515 858
- DE-A- 1 515 888
- FR-A- 2 048 351
- FR-A- 2 087 619
- FR-A- 2 088 936
- FR-A- 2 258 026
- FR-A- 2 629 382
- US-A- 2 995 051
- US-A- 3 311 001
- US-A- 3 336 666
- US-A- 4 480 509

## Description

La présente invention est relative au domaine technique de l'outillage à main et elle concerne, plus particulièrement, les outils utilisés dans le domaine de l'électricité pour couper et dénuder les conducteurs électriques à caractère souple ou rigide, mono ou multi-brins, revêtus d'une gaine isolante, généralement en matière plastique surmoulée.

La pose de câbles conducteurs, entre des organes producteurs, consommateurs ou dérivateurs de l'énergie électrique, impose de couper ces câbles à longueur et de dénuder chacune des parties terminales, de façon à faciliter le raccordement et la connexion électrique avec des bornes prévues à cet effet.

Ces deux opérations s'exécutent au moyen d'outils à caractère spécifique constitués par une pince coupante indépendante et par une pince à dénuder.

La pince coupante est réalisée en forme de cisaille pour comporter deux arêtes coupantes situées en vis-à-vis et permettant de sectionner, simultanément, la gaine isolante et le conducteur.

La pince à dénuder est réalisée pour comporter deux arêtes présentant, en vis-à-vis, des entailles ou encoches complémentaires définissant une gamme de gabarits dont les sections correspondent à celles normalisées des conducteurs électriques utilisés.

Une telle pince est utilisée en choisissant, convenablement, dans la gamme de gabarits, le calibre correspondant à la section du conducteur électrique à dénuder. Ce câble est placé entre les encoches et la pince est fermée pour sectionner, uniquement, l'épaisseur de la gaine isolante. Par traction axiale, la pince permet, ensuite, d'extraire, par coulissement, la partie de gaine sectionnée pour dénuder la partie correspondante du câble électrique.

Pour tenter d'exécuter en une seule opération la coupe et le dénudage, l'art antérieur a proposé un outil combiné comportant deux leviers articulés dont les extrémités utiles sont pourvues de deux retours possédant, chacun, des mâchoires mobiles relativement qui permettent, après coupe, de faire coulisser la gaine isolante par rapport aux conducteurs électriques. Un tel outil combiné se caractérise par le fait que son utilisation implique de disposer la pince à plat, sensiblement parallèlement au conducteur, et de la manoeuvrer de cette façon pour que l'opérateur puisse observer et contrôler le déroulement successif de la phase de coupe et de la phase de dénudage.

Il s'avère qu'une telle orientation d'utilisation n'est pas ergonomique et exige, de la part de l'opérateur, une position de l'avant-bras, du poignet et de la main entraînant, rapidement, une fatigue lors d'actions répétées et, surtout, diminuant notablement la puissance physique de serrage qu'il peut exercer sur les poignées de préhension et d'actionnement de l'outil.

Par ailleurs, une telle structure de pince se caractérise, aussi, par un encombrement important dans le plan de travail, ce qui, incontestablement, représente, une gêne lors de la mise en oeuvre et, plus particulièrement, lorsqu'il convient d'exécuter une opération de coupe-dénudage à l'intérieur d'un coffret de connexion par exemple.

Un autre inconvénient de la pince ci-dessus réside dans sa relative complexité découlant des différents organes constitutifs mobiles relativement devant être mis en oeuvre, dans la fragilité qui en découle et dans le prix de revient qu'une telle structure implique.

La technique antérieure connaît également la proposition selon le document **FR-A-2 258 026** se rapportant à une pince dont les mâchoires, pourvues d'organes de coupe, sont munies en bout de secteurs cylindriques dentés, articulés et commandés en pivotement par l'actionnement de branches.

Les moyens mis en oeuvre pour assurer la double fonction de coupe et dénudage, sont alignés dans le plan de la pince et impliquent lors d'une mise en service, d'engager un câble à dénuder par et entre les secteurs afin de traverser ensuite les moyens de coupe et de rétention.

Il en résulte que le dénudage ne peut s'opérer que par l'action des secteurs qui doivent agir en repoussant vers l'extérieur non pas la simple partie de gaine à dénuder mais l'ensemble du câble dont la longueur et la raideur sont responsables d'une gêne certaine pour l'opérateur.

La technique antérieure connaît aussi l'enseignement dû au brevet **US-2 995 051** préconisant de monter sur les mâchoires d'une pince à presser ou serrer, un organe de coupe de la gaine qui doit être manoeuvré en deux temps et manuellement pour obtenir l'extraction de la partie de gaine dénudée.

Cette disposition implique de recourir à une action manuelle de coupe, puis à une seconde action manuelle de dénudage, ce qui représente une sujétion pour l'opérateur qui, avec une telle pince, ne peut pas réaliser la coupe globale du câble, c'est-à-dire à la fois de la gaine et du conducteur.

La présente invention vise à remédier aux inconvénients ci-dessus en proposant un nouvel outil combiné pour couper et dénuder les extrémités de conducteurs électriques revêtus d'une gaine isolante.

L'outil combiné selon l'invention est, principalement, constitué pour que l'action de travail permettant la coupe et le dénudage puisse intervenir avec une prise en main ordinaire analogue à celle d'une pince coupante, dans laquelle le plan général de la pince est perpendiculaire au conducteur à couper et à dénuder.

L'outil combiné selon l'invention est, par ailleurs, conçu de manière à se présenter sous un encombrement relativement faible permettant une utilisation pratique, même dans les espaces exigus où, fréquemment, des connexions électriques doivent être exécutées.

Un autre objet de l'invention est de proposer un nouvel outil combiné, de conception particulièrement robuste et fiable, capable d'assurer un service certain sans défaillance dans le temps.

Un objet supplémentaire de l'invention est de proposer un outil combiné qui puisse être réalisé pour permettre la coupe et le dénudage d'une extrémité d'un conducteur ou, éventuellement, des deux extrémités de part et d'autre de la coupe exécutée.

Un autre objet de l'invention est de proposer un outil combiné pouvant être utilisé pour des conducteurs électriques de sections diverses, sans nécessiter de réglage spécifique, en fonction du diamètre du conducteur électrique proprement dit.

Pour atteindre les objectifs ci-dessus, l'outil combiné selon l'invention, du type comprenant une pince à couper constituée par deux leviers formant, de part et d'autre d'un pivot d'articulation commun, deux poignées de préhension et d'actionnement et deux lames présentant en vis-à-vis deux arêtes de coupe constituant une cisaille, est caractérisé en ce que :
- l'un des leviers au moins comporte, en bout et parallèlement à son arête de coupe, un contre-mors monté escamotable contre l'action d'un organe élastique de rappel limiteur de pression, derrière l'arête de coupe de ladite lame,
- le second levier est associé, latéralement, sur sa face extérieure, à une pince à couper et à dénuder la gaine d'un câble, ladite pince comprenant deux mâchoires qui sont articulées entre elles et sur ledit levier, disposées latéralement et extérieurement et associées à un organe de commande ancré sur le premier levier et apte à provoquer, lors de la fermeture des leviers, tout d'abord leur propre fermeture partielle pour couper la gaine puis, ensuite, leur déport latéral vers l'extérieur pour extraire le câble de la partie de gaine coupée et pincée.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une perspective illustrant l'outil combiné de l'invention vu sous un angle d'appréciation correspondant à l'une de ses faces.

La **fig. 2** est une perspective, analogue à la **fig. 1**, mais illustrant la pince sur sa seconde face.

La **fig. 3** est une coupe transversale prise, à plus grande échelle, selon le plan **III-III** de la **fig. 2**.

La **fig. 4** est une perspective, analogue à la **fig. 2**, mais illustrant la pince dans un état premier de fonctionnement.

La **fig. 5** est une coupe transversale prise, à plus grande échelle, selon le plan **V-V** de la **fig. 4**.

La **fig. 6** est une perspective illustrant, sous un angle différent, une autre phase de mise en service de la pince.

La **fig. 7** est une perspective, analogue à la **fig. 6**, montrant un développement possible de l'objet de l'invention.

La **fig. 8** est une perspective partielle, analogue à la **fig. 2**, et illustrant un développement de l'invention.

La **fig. 9** est une vue en plan correspondant à la **fig. 8** et montrant une caractéristique constructive.

La **fig. 10** est une vue, analogue à la **fig. 6**, mais montrant une variante de réalisation.

La **fig. 11** est une perspective partielle illustrant une variante de réalisation.

La **fig. 12** est une vue en plan explicative d'un état de fonctionnement de l'exemple selon la **fig. 11**.

La **fig. 13** est une vue en coupe transversale prise selon la ligne **XIII-XIII** de la **fig. 12**.

La **fig. 14** est une vue en plan analogue à la **fig. 12** et montrant une autre position caractéristique.

La **fig. 15** est une vue en coupe transversale prise selon la ligne **XV-XV** de la **fig. 14.**

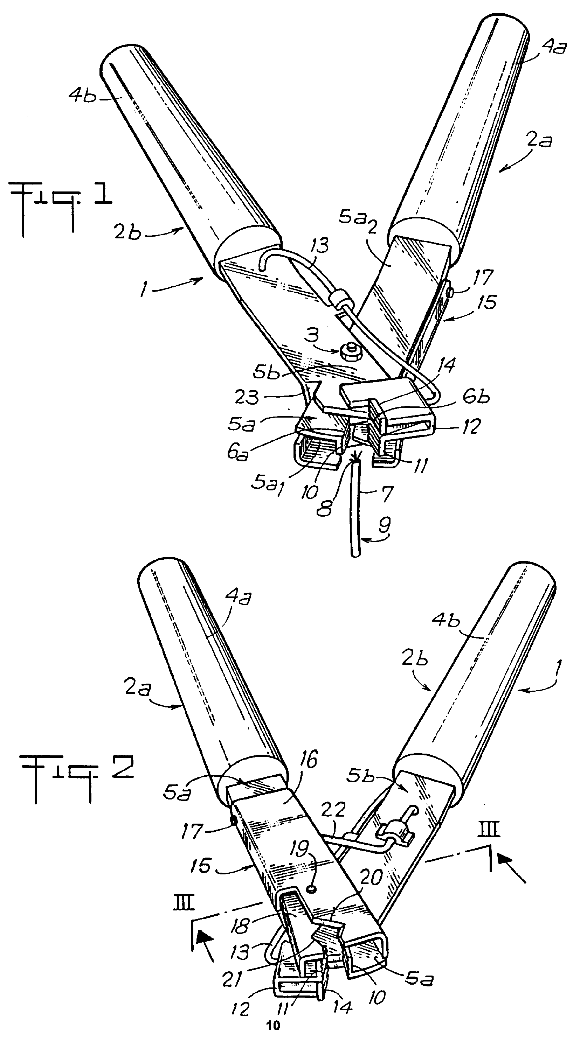

L'outil combiné selon l'invention, tel que représenté par les fig. **1 à 3**, comprend, tout d'abord, une pince à couper **1** constituée par deux leviers **2a** et **2b** articulés l'un avec l'autre par l'intermédiaire d'une entablure ou d'un pivot d'articulation **3**. Les leviers **2** forment, de part et d'autre du pivot **3**, deux poignées **4a**, **4b** de préhension et d'actionnement et deux lames **5a**, **5b** s'étendant parallèlement et côte à côte. Les lames **5a** et **5b** présentent, en vis-à-vis et à partir de leurs extrémités opposées aux poignées **4**, deux arêtes de coupes **6a** et **6b**, de préférence rectilignes. Les arêtes **6a**, **6b** constituent, ensemble, une cisaille analogue à une pince coupante et permettant de sectionner à la fois la gaine isolante **7** et le ou les conducteurs électriques **8** d'un câble **9**.

Selon l'invention, l'un des leviers, tel que le levier **2a** comporte, en bout et parallèlement à son arête de coupe **6a**, un mors de pinçage **10** s'étendant perpendiculairement au plan de la lame **5a** et à partir de la face extérieure **5a₁** de cette dernière par opposition à la face **5a₂** qualifiée d'intérieure en raison de son orientation en vis-à-vis de la lame **5b**.

Le mors de pinçage **10** est formé pour faire face à un contre-mors **11**, par exemple, présenté par un cavalier **12** monté de manière à pouvoir coulisser sur la lame **5b**, plus particulièrement, selon une direction sensiblement perpendiculaire à l'arête **6b**. Le cavalier **12** est, de préférence, réalisé pour chevaucher le bord de la lame **5b** opposé à l'arête de coupe **6b**. Le cavalier **12** est associé à un organe élastique de rappel **13** ancré sur la lame **5b** et sollicitant, toujours, ce cavalier en déplacement dans le sens pour lequel le contre-mors **11** s'étend au-delà de l'arête de coupe **6b** ou, tout au moins, dans le plan de cette dernière. Le ressort **13** constitue à la fois un organe élastique de rappel, ainsi qu'un limiteur de pression autorisant l'escamotage ou l'effacement du contre-mors **11** par coulissement relatif du cavalier **12** sur la lame **5b** dès que le mors de pinçage **10** exerce, en pinçant un câble **9** contre le contre-mors **11**, un effort de pression supérieur à l'action antagoniste du ressort **13**. Le cavalier **12** est immobilisé dans une position stable sous l'action de l'organe élastique **13** par appui contre une butée **14** présentée par la lame **5b**. De préférence, la butée **14** est réalisée sous la forme d'un mors identique au mors **10**.

Le contre-mors **11** pourrait, aussi, être réalisé différemment, par exemple, par une palette solidaire d'un ressort du type à lame, pliée ou non, portée par la branche **2b** et, plus particulièrement, la lame **5b**.

Le levier **2a** comporte, par ailleurs, latéralement et parallèlement à la face extérieure **5a₁** de la lame **5a**, une pince auxiliaire ou secondaire **15** dite à couper et à dénuder la gaine **7**. La pince **15** comprend une première mâchoire **16** qui est montée sur la lame **5a** par un axe d'articulation **17** s'étendant, sensiblement, perpendiculairement à l'arête de coupe **6a**. De préférence, l'axe d'articulation **17** est disposé à l'opposé de la lame de coupe **6a** par rapport au pivot d'articulation **3**. La pince **15** comporte une seconde mâchoire **18** qui est articulée sur la première par l'intermédiaire d'un pivot **19**. Les mâchoires **16** et **18** présentent, sur leurs bords en vis-à-vis et entre le pivot **19** et leurs extrémités libres, deux arêtes de coupe en anglet **20** et **21** exécutées, dans un premier exemple, pour laisser subsister toujours entre elles, dans l'état de fermeture de la pince **15**, une section de passage minimale correspondant, par exemple, à la plus faible section possible pouvant être conférée au conducteur **8**. Les mâchoires **16** et **18** sont conformées pour recouvrir le mors **10** et le contre-mors **11** en présentant les arêtes **20** et **21** sensiblement dans le plan transversal de ces mors.

La pince **15** est associée à un organe de commande **22** interposé entre la pince **15** et la deuxième lame **5b**, de manière à provoquer, lors de la fermeture des leviers **2a** et **2b**, tout d'abord la fermeture relative de la mâchoire **18** contre la mâchoire **16,** puis, ensuite, le déport latéral par pivotement sur l'axe **17** de la pince **15**.

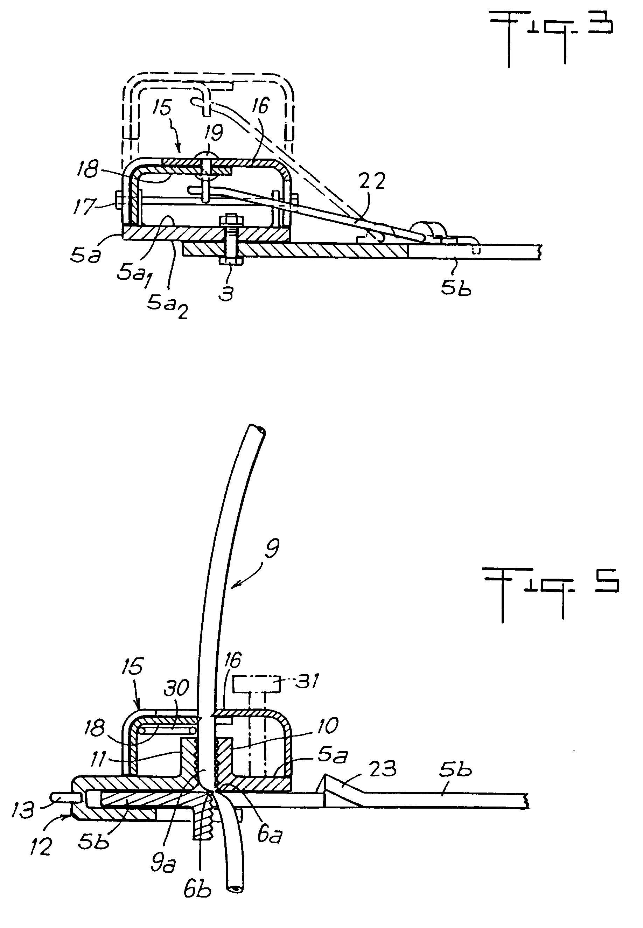

Dans une forme de réalisation, l'organe de commande **22** est constitué par un ressort, du type corde à piano, ancré sur la lame **5b** d'une part, et sur la mâchoire mobile **18** d'autre part, pour s'étendre latéralement aux branches **5a** et **5b**, comme cela ressort de l'examen des **fig. 2** et **3**. Le ressort **22** est conformé pour que, dans la position d'ouverture selon la **fig. 2**, la mâchoire **18** occupe une position d'ouverture relative par rapport à la mâchoire **16** maintenue parallèlement à la lame **5a**. La conformation du ressort **22** est, également, choisie pour lui faire assumer une fonction d'ouverture des branches **2a** et **2b** jusque dans une position maximale, par exemple déterminée par une butée **23** portée par les lames, telles que **5b**, pour être placée sur la trajectoire angulaire de la lame **5a**.

L'outil combiné décrit ci-dessus fonctionne de la façon suivante.

Dans la position d'ouverture illustrée par les **fig. 1** et **2**, un câble électrique, tel que **9**, peut être engagé par les arêtes en anglet **20** et **21**, entre les mâchoires **16** et **18**, pour traverser, également, les lames **5a** et **5b**.

Dans cet état, la fermeture de la pince **1**, par rapprochement des poignées **4a** et **4b**, provoque, tout d'abord, la fermeture des lames **6a** et **6b** dont le mors **10** et le contre-mors **11** viennent pincer la partie du câble électrique traversant la pince de dénudage **15**. Au fur et à mesure de la fermeture, le mors **10** exerce un effort de pression sur le câble **9** qui le répercute au contre-mors **11**. Le cavalier **12** est, ainsi, sollicité en escamotage ou en effacement relatif en mettant sous contrainte le ressort de rappel **13**. Le contre-mors **11** est déplacé en retrait de l'arête **6b** qui est amenée à coopérer avec l'arête **6a** pour exécuter le sectionnement de la partie terminale du câble **9**, c'est-à-dire simultanément de la gaine **7** et du conducteur **8**.

Cette phase opératoire, illustrée par les **fig. 4** et **5**, permet de constater que la pince à couper et à dénuder **15** occupe toujours sa position parallèle à sa face extérieure **5a₁** de la lame **5a**.

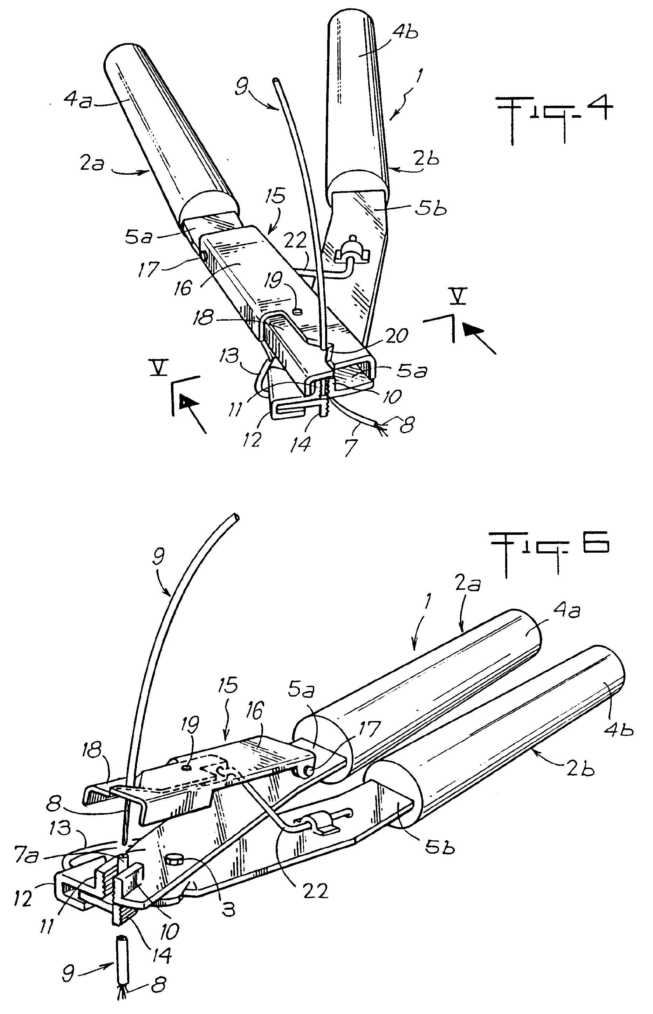

La course de fermeture de la pince **1**, telle que décrite ci-dessus, a pour effet de déplacer relativement le ressort **22** qui est progressivement mis sous contrainte pour provoquer, simultanément, la fermeture progressive de la mâchoire **18** par rapport à la mâchoire **16**. Les arêtes en anglet **20** et **21** viennent, ainsi, enserrer la partie du câble traversant la pince **15** et exécutent, en fin de course de fermeture, la coupe de la gaine **7** uniquement. Ainsi que cela ressort de la **fig. 5**, cette coupe est exécutée au-delà de la partie terminale du câble **9** pincé par le mors **10** et le contre-mors **11**, étant donné que les mâchoires **16** et **18** s'étendent parallèlement et à l'extérieur des mors **10** et contre-mors **11**. En fin de course de fermeture, la mâchoire **18** est en butée contre la mâchoire **16**, de sorte que la fermeture des leviers **2a** et **2b** provoque, par l'intermédiaire du ressort **22**, une sollicitation en pivotement vers l'extérieur de la pince **15** qui est, ainsi, déportée extérieurement, comme cela ressort des **fig. 3** et **6**. Le déport de la pince **15**, par pivotement sur l'axe **17**, permet aux mâchoires **16** et **18** de prendre appui sur la gaine **7** coupée et d'entraîner, dans le sens de la flèche **f₁**, le câble **9** dont le conducteur **8** est extrait par glissement du segment de gaine **7a** pincé entre le mors **10** et le contre-mors **11**.

La course d'ouverture de la pince **1** permet de provoquer l'ouverture relative des mâchoires **16** et **18** libérant le câble **9** présentant une partie terminale formée par le conducteur **8** dénudé.

L'ouverture de la pince **1** provoque l'écartement des lames **5a** et **5b** et le retour du cavalier **12** dans sa position d'origine. Le contre-mors **11** maintient le segment de gaine **7a** contre le mors **10** et en assure la translation pour le ramener dans le plan des arêtes **6a** et **6b** permettant son éjection lors de l'ouverture complète.

Ainsi que cela ressort de ce qui précède, l'outil combiné selon l'invention comporte une pince **1** agissant de la manière habituelle des pinces, c'est-à-dire capable d'exécuter une action de cisaillement en étant présentée pour que le plan général des lames de coupe soit placé perpendiculairement au câble à couper.

Par ailleurs, la pince de coupe et de dénudage **15** est portée parallèlement et à l'extérieur de l'une des lames en étant constituée par deux mâchoires susceptibles de pivoter relativement. Cette pince **15** est, par ailleurs, articulée sur un axe **17** perpendiculaire à l'arête de coupe de la lame porteuse, de sorte que le fonctionnement de la pince à dénuder **15** fait intervenir une action de coupe de la gaine exécutée en tenant l'outil toujours dans le même sens et en agissant sur les poignées de manière habituelle à la conduite d'une action de coupe par fermeture. La phase de dénudage intervient en procédant toujours de même façon, puisque le déport est produit en fin de course de fermeture.

Ainsi, l'opérateur peut exécuter une opération de coupe et de dénudage en présentant l'outil combiné, de manière conventionnelle par rapport au câble **9** sur lequel il peut exercer une action de pinçage et de coupe selon un mouvement et une posture particulièrement ergonomiques capables de faire intervenir la puissance maximale physique.

Il convient de remarquer que l'encombrement relativement faible de l'outil combiné permet d'exécuter une telle opération de coupe-dénudage, à l'intérieur d'un coffret ou d'une armoire électrique, tout en évitant de laisser tomber, à l'intérieur de cette dernière, le segment **7a** qui peut être extrait, après l'opération de coupe-dénudage, en étant maintenu entre le mors **10** et le contre-mors **11** par l'opérateur contrôlant, manuellement, la course d'ouverture de la pince sous l'action du ressort **22**.

L'examen des **fig. 1** à **6** permet de constater, par ailleurs, que l'outil combiné est formé d'éléments constitutifs ou structurels, simples et robustes, qui sont à même d'assurer un service, particulièrement durable et fiable dans le temps, sans entretien spécifique.

La **fig. 7** montre que l'outil combiné selon l'invention peut être réalisé de manière à faire comporter, à chacun des leviers **2a** et **2b**, les mêmes organes constitutifs que ceux décrits précédemment. Dans un tel cas, il devient alors possible d'exécuter la coupe ou le sectionnement d'un câble en obtenant, simultanément, le dénudage des deux parties terminales sectionnées.

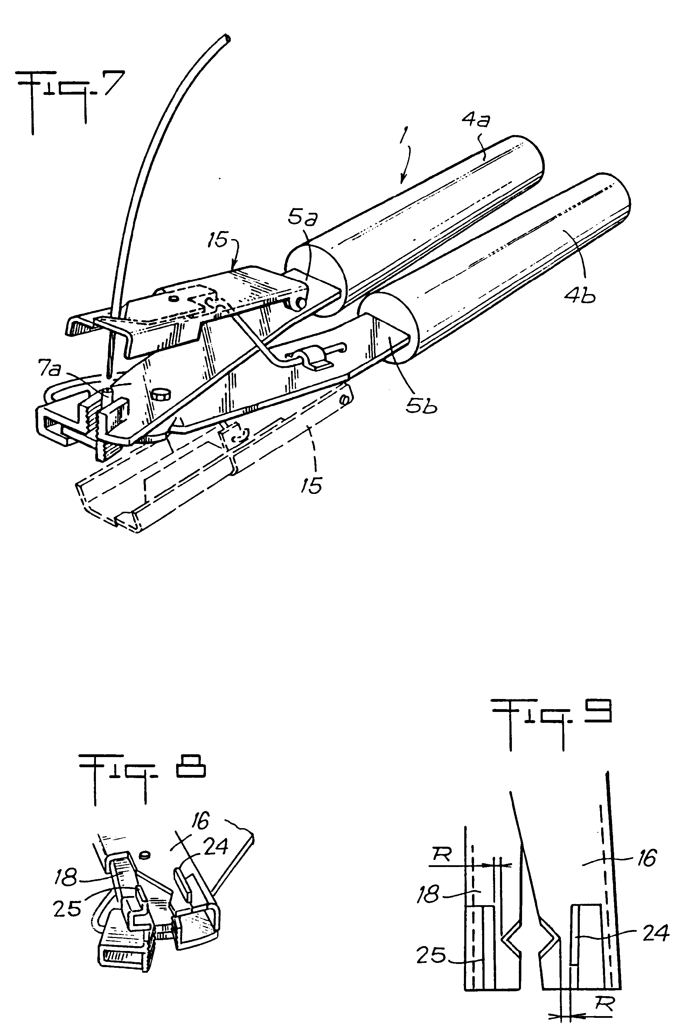

Les fig. **8** et **9** montrent une variante de réalisation selon laquelle il est prévu de réaliser les mâchoires **16** et **18** de la pince **15** pour leur faire comporter, extérieurement et au droit des arêtes de coupe en anglet **20** et **21**, chacune, une butée **24** et **25** qui est disposée en retrait d'une faible mesure **R** par rapport au fond des arêtes en anglet **20** et **21**. De cette manière, la course de fermeture de la mâchoire **18** est limitée par le pincement de la gaine **7** entre les butées **24** et **25**, de telle sorte que l'action de coupe des arêtes **20** et **21** est réduite à la mesure **R** choisie pour équivaloir, sensiblement, à l'épaisseur de la gaine **7**.

Bien que cela ne soit pas représenté, il peut être prévu d'organiser les butées **24** et **25** de manière à rendre la mesure **R** réglable.

La **fig. 5** montre qu'il peut être prévu de disposer, à l'intérieur de la mâchoire mobile **18**, un ressort éjecteur **30** mis sous contrainte lors de la phase de coupe et de dénudage et qui se trouve libéré lors de la phase de déport de la pince **15**. Ainsi, lors de la course de réouverture de l'outil combiné, le ressort **30** réoccupe sa position d'origine et contribue, lors du retour de la pince **15** dans sa position en alignement avec la lame **5a**, à provoquer l'éjection du segment de gaine **7a** libéré par l'ouverture relative du mors **10**.

La **fig. 5** montre, également, qu'il est possible de munir la pince **15**, notamment la mâchoire **16**, d'une vis **31** de réglage de l'écartement de la pince **15** en position de retour sur la lame **5a**. Par cette vis, il devient possible de régler la longueur du segment de gaine à dénuder.

La **fig. 10** montre une variante de réalisation selon laquelle l'organe de commande **22** est constitué par une biellette **35** montée articulée entre la lame **5b** et la mâchoire **18** de la pince **15**. L'organe **22** comprend, en plus, un ressort **36** du type en épingle ancré en **37** sur la lame **5a** et en **38** sur la mâchoire **18**. La biellette **35** et le ressort **36** sont organisés pour définir un point de bascule pour la fermeture et l'ouverture en déport de la pince **15**. Ce point de bascule permet de disposer, pour la pince **15**, d'une course de retour quelque peu retardée, afin d'assurer l'ouverture des mors avant le retour de la pince **15** pour permettre l'éjection, notamment par le ressort **30**, du segment de gaine dénudé et retenu entre les mors **10** et **11** avant le retour de la partie dénudée du conducteur.

La **fig. 11** montre une variante de réalisation préférée découlant de la forme d'exécution selon la **fig. 10** et prévue pour conférer à la pince une possibilité de réglage préalable de la partie terminale de câble **9** à dénuder, plus pratique que celle évoquée en relation avec la **fig. 5**.

La variante selon la **fig. 11** comporte les mêmes éléments constitutifs que ceux décrits en référence aux figures précédentes et, plus particulièrement, à la **fig. 10**, hormis la pince **15** auxiliaire ou secondaire chargée de couper et dénuder la gaine **7.**

Dans cette forme de réalisation, la pince **15** comprend une première mâchoire **16₁** qui est montée sur l'axe **17** tout en étant fixée à la lame **5a** par un dispositif **40** de réglage d'écartement. Un tel dispositif **40** peut être formé, notamment, par une vis **41** montée dans un taraudage de la lame **5a** et comportant une extrémité immobilisée axialement mais libre de tourner dans la mâchoire **16₁**. Dans un tel cas, la vis **41** est manoeuvrable depuis la face de la lame **5a** opposée à la pince **15**. De façon équivalente, il pourrait être prévu d'adopter un montage inverse pour assurer toujours la même fonction qui est de permettre un réglage d'écartement entre la lame **5a** et la mâchoire **16** qui, dans le montage selon cette variante, est désolidarisée de la mâchoire **18**, selon l'organisation de la **fig. 10**.

La pince **15** comprend une seconde mâchoire **18₁** complémentaire à la mâchoire **16₁** pour ce qui concerne les arêtes de coupe en anglet **20** et **21** de même réalisation que précédemment décrit. La mâchoire **18₁** est montée articulée par un pivot **42** sur une platine latérale **43** articulée sur l'axe **17**. La mâchoire **18₁** est disposée contre la face intérieure de la platine qui est sollicitée par un organe élastique **44**, par exemple enfilé sur l'axe **17**, pour plaquer toujours la mâchoire **18₁** contre la mâchoire **16₁**, quel que soit le réglage d'écartement de cette dernière par rapport à la lame **5a**. La mâchoire **18₁** comporte, en saillie sur sa face extérieure et en retrait de l'arête **21**, un mors **45** s'étendant parallèlement à un contre-mors **46** porté par la platine **43**. Dans cette forme de réalisation, l'organe de commande **22**, de préférence du type biellette selon la **fig. 10**, est interposé entre la lame **5b** et la mâchoire **18₁**. Dans cette forme de réalisation, la pince à couper **1** est dépourvue des mors **10** et contre-mors **11**.

La variante de réalisation décrite ci-dessus fonctionne de la façon suivante.

Le câble électrique **9** est engagé comme dit précédemment pour, soit venir en butée contre les lames **5a** et **5b**, soit traverser ces dernières ouvertes si la partie terminale doit être coupée.

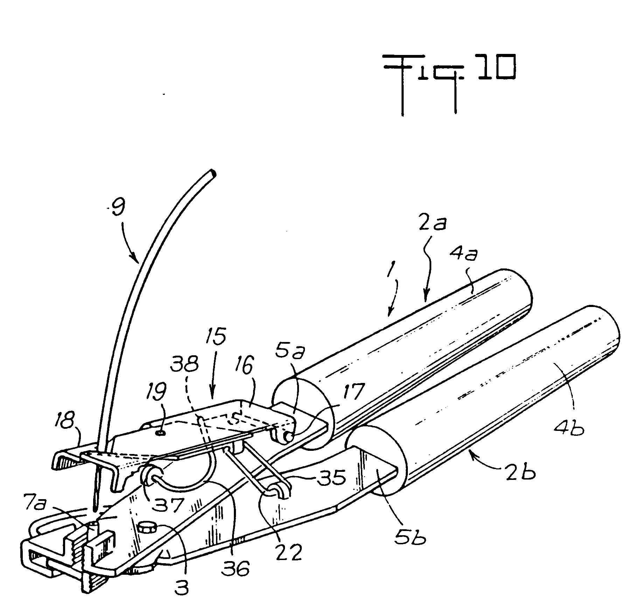

Les poignées sont ensuite manoeuvrées pour fermer les lames **5a** et **5b**, en vue d'assurer éventuellement la coupe de la gaine **7** et du conducteur **8**, et pour fermer la pince **15** par pivotement de la mâchoire **18₁** sur la platine **43** avec glissement contre la mâchoire **16₁**. Les **fig. 12** et **13** montrent que la fermeture de la pince **15** se traduit par une pénétration des arêtes **20** et **21** dans la gaine **7** avec simultanément un pincement du câble **9** situé à l'extérieur de l'outil par les mors **45** et contre-mors **46**. La **fig. 13** met en évidence que les arêtes entaillent la gaine **7** à une distance **d** des lames **5**, distance **d** correspondant au réglage d'écartement conféré par le dispositif **40**.

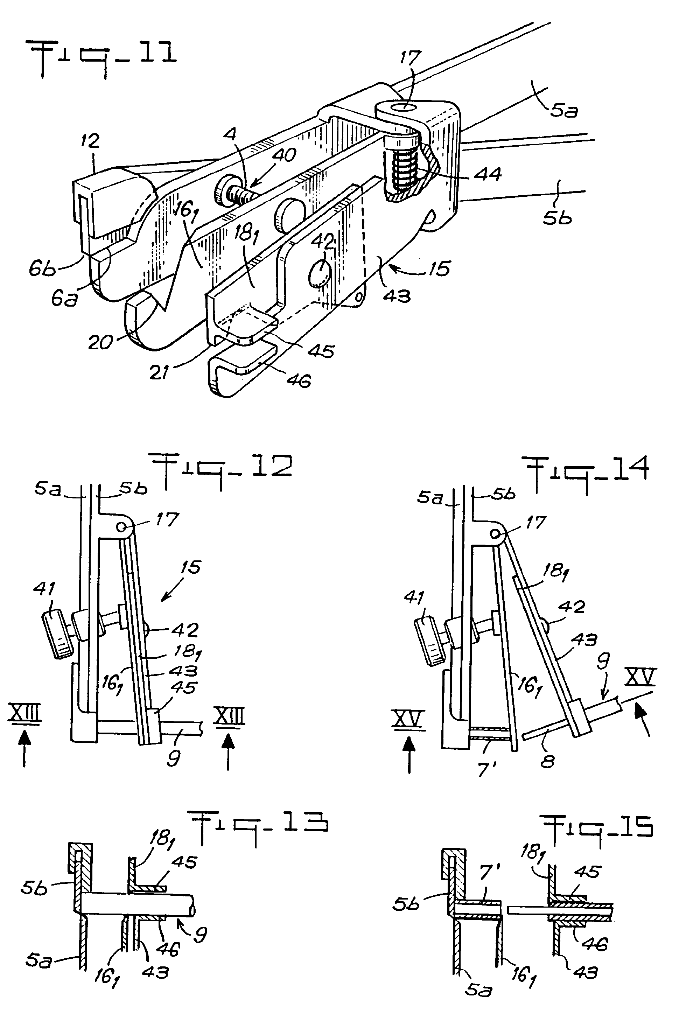

A partir de cette position dans laquelle dans tous les cas le câble **9** est en butée contre les lames **5**, la manoeuvre en fermeture des poignées **4a** et **4b** se traduit, par l'intermédiaire de l'organe de commande **22**, par une sollicitation en pivotement d'ouverture selon la flèche **f₁** de la platine **43** comme cela ressort des **fig. 14** et **15**. La mâchoire **16₁** immobile constitue une butée s'opposant au recul de la partie de gaine **7**′ comprise entre elle-même et les lames **5a**-**5b**. Par contre, la platine **43** entraîne, dans son pivotement latéral, le câble **9** serré entre les mors **45** et contre-mors **46**. La gaine **7**, si elle n'a pas été complètement coupée par les mâchoires **16₁** et **18₁**, est déchirée, de sorte que le conducteur **8** peut glisser à l'intérieur de la partie de gaine **7**′.

En fin de course d'ouverture, le câble **9**, toujours retenu entre les mors **45** et contre-mors **46**, présente alors une partie terminale dénudée sur une mesure axiale égale à **d**.

L'invention n'est pas limitée aux exemples décrits et représentés, car diverses modifications peuvent y être apportées sans sortir de son cadre.

## Revendications

1. Outil combiné pour couper et dénuder les extrémités de câbles électriques revêtues d'une gaine isolante, du type comprenant une pince à couper (**1**) constituée par deux leviers (**2a**, **2b**) formant, de part et d'autre d'un pivot d'articulation commun (**3**), deux poignées (**4a**, **4b**) de préhension et d'actionnement et deux lames (**5a**, **5b**) présentant en vis-à-vis deux arêtes de coupe (**6a**, **6b**) constituant une cisaille,
caractérisé en ce que :
- l'un des leviers au moins comporte, en bout et parallèlement à son arête de coupe, un contre-mors (**11**) monté escamotable contre l'action d'un organe élastique de rappel (**13**) limiteur de pression, derrière l'arête de coupe de ladite lame,
- le second levier est associé, latéralement, sur sa face extérieure, à une pince (**15**) à couper et à dénuder la gaine d'un câble, ladite pince comprenant deux mâchoires (**16,** **18**) qui sont articulées entre elles et sur ledit levier, disposées latéralement et extérieurement et associées à un organe de commande (**22**) ancré sur le premier levier et apte à provoquer, lors de la fermeture des leviers, tout d'abord leur propre fermeture partielle pour couper la gaine puis, ensuite, leur déport latéral vers l'extérieur pour extraire le câble de la partie de gaine coupée et pincée.

2. Outil combiné selon la revendication 1, caractérisé en ce que la pince (**15**) à couper et à dénuder est montée sur la face extérieure (**5a₁**) du levier (**2a**) par un axe d'articulation (**17**) perpendiculaire à l'arête de coupe (**6a**) de la lame dudit levier.

3. Outil combiné selon la revendication 2, caractérisé en ce que l'axe d'articulation (**17**) est situé au-delà du pivot commun (**3**) d'articulation par rapport à l'arête de coupe.

4. Outil combiné selon la revendication 1, caractérisé en ce que les mâchoires de la pince (**15**) à couper et à dénuder comportent en vis-à-vis des arêtes de coupe en anglet (**20**, **21**).

5. 5 - Outil combiné selon la revendication 1, caractérisé en ce que la pince (**15**) à couper et à dénuder
comprend :
- une première mâchoire (**16**) montée par l'axe d'articulation (**17**) sur le levier,
- une seconde mâchoire (**18**) articulée sur la première par un pivot (**19**),
- un organe de commande (**22**) ancré sur le second levier et sur la seconde mâchoire et sollicitant, en position d'ouverture des leviers de l'outil, la première mâchoire en alignement avec le levier la portant et la seconde mâchoire en ouverture par rapport à la première.

6. Outil combiné selon la revendication 4 ou 5, caractérisé en ce que les mâchoires de la pince à dénuder comportent des arêtes de coupe bordées par des butées de dénudage (**24**, **25**) décalées en retrait de ces arêtes.

7. Outil combiné selon la revendication 1, caractérisé en ce que le ressort de rappel (**13**) maintient le contre-mors, dans un état non escamoté, contre une butée (**14**) du second levier.

8. Outil combiné selon la revendication 5, caractérisé en ce que la première mâchoire (**16**) de la pince (**15**) à couper et à dénuder comporte un ressort-éjecteur (**30**) destiné à être mis sous contrainte par la seconde mâchoire lors de la fermeture de ladite pince.

9. Outil combiné selon la revendication 5, caractérisé en ce que l'organe de commande (**22**) est constitué par un ressort.

10. Outil combiné selon la revendication 1, caractérisé en ce que l'organe de commande (**22**) est constitué par une biellette (**35**) articulée entre la lame (**5b**) et la mâchoire (**18**) de la pince (**15**) et par un ressort (**36**) ancré entre la mâchoire (**5a**) et la mâchoire (**16**) de la pince, la biellette (**35**) et le ressort étant organisés pour définir un point de bascule entre la position appliquée et la position déportée de la pince.

11. Outil combiné selon la revendication 1, caractérisé en ce que la mâchoire (**16**) porte une vis de réglage de la longueur du câble à dénuder.

12. Outil combiné selon la revendication 1, caractérisé en ce que la pince (**15**) comprend :
- une mâchoire (**16₁**) montée sur l'axe (**17**) et fixée à la lame (**5a**) par un dispositif (**40**) de réglage d'écartement,
- une mâchoire (**18₁**) reliée à l'organe de commande (**22**) et montée articulée par un pivot (**42**) sur une platine latérale (**43**) montée sur l'axe (**17**) et soumise à l'action d'un ressort (**44**) la faisant pivoter dans le sens où la mâchoire (**18₁**) est appliquée contre la mâchoire (**16₁**).

13. Outil combiné selon la revendication 12, caractérisé en ce que la mâchoire (**18₁**) comporte, en retrait de son arête de coupe, un mors (**45**) s'étendant parallèlement à un contre-mors (**46**) porté par la platine (**43**).

## Patentansprüche

1. Kombinationswerkzeug zum Schneiden und Abisolieren der Enden von mit einer isolierenden Hülle überzogenen elektrischen Kabeln, mit einem Seitenschneider (1), der aus zwei Hebeln (2a, 2b) gebildet ist, die beiderseits eines gemeinsamen Gelenkzapfens (3) zwei Griffe (4a, 4b) zur Handhabung und Betätigung sowie zwei Klingen (5a, 5b) bilden, die einander zugewandt zwei Schneidkanten (6a, 6b) aufweisen, die eine Schneideinrichtung bilden,
**dadurch gekennzeichnet**, daß:
- wenigstens einer der Hebel am Ende parallel zu seiner Schneidkante eine gegen die Wirkung eines druckbegrenzenden elastischen Rückholorgans (13) eindrückbar montierte Gegenklemmbacke (11) hinter der Schneidkante der Klinge aufweist,
- der zweite Hebel seitlich an seiner Außenseite mit einer Zange (15) zum Schneiden und Abstreifen der Hülle eines Kabels verbunden ist, wobei die Zange zwei Backen (16, 18) umfaßt, die untereinander und mit dem Hebel gelenkig verbunden sind, seitlich außerhalb angeordnet und mit einem am ersten Hebel verankerten Steuerorgan (22) verbunden sind, das eingerichtet ist, um bei der Schließung der Hebel zunächst deren eigene partielle Schließung zum Schneiden der Hülle und anschließend ihre seitliche Verschiebung nach außen zum Abziehen des Kabels von dem abgeschnittenen und eingeklemmten Hüllenabschnitt zu bewirken.

2. Kombinationswerkzeug nach Anspruch 1,
dadurch gekennzeichnet, daß
die Schneid- und Abisolierzange (15) an der Außenseite (5a₁) des Hebels (2a) über eine zur Schneidkante (6a) der Klinge des Hebels senkrechte Gelenkachse (17) montiert ist.

3. Kombinationswerkzeug nach Anspruch 2,
dadurch gekennzeichnet, daß
die Gelenkachse (17) bezogen auf die Schneidkante jenseits des gemeinsamen Gelenkzapfens (3) angeordnet ist.

4. Kombinationswerkzeug nach Anspruch 1,
dadurch gekennzeichnet, daß
die Backen der Schneid- und Abisolierzange (15) einander zugewandt winkelförmige Schneidkanten (20, 21) aufweisen.

5. Kombinationswerkzeug nach Anspruch 1,
dadurch gekennzeichnet, daß
die Schneid- und Abisolierzange (15) umfaßt:
- eine über die Gelenkachse (17) am Hebel montierte erste Backe (16),
- eine über einen Zapfen (19) an die erste angelenkte zweite Backe (18),
- ein am zweiten Hebel und an der zweiten Backe verankertes Steuerorgan (22), das in Öffnungsposition der Hebel des Werkzeugs die erste Backe auf den sie tragenden Hebel ausrichtet und die zweite Backe gegen die erste öffnet.

6. Kombinationswerkzeug nach Anspruch 4 oder 5,
dadurch gekennzeichnet, daß
die Backen der Abisolierzange Schneidkanten mit angrenzenden, gegen die Schneidkanten zurückversetzten Abisolieranschlägen (24, 25) aufweisen.

7. Kombinationswerkzeug nach Anspruch 1,
dadurch gekennzeichnet, daß
in einem nicht eingedrückten Zustand die Rückholfeder (13) die Gegenklemmbacke an einem Anschlag (14) des zweiten Hebels hält.

8. Kombinationswerkzeug nach Anspruch 5,
dadurch gekennzeichnet, daß
die erste Klemme (16) der Schneid- und Abisolierzange (15) eine Auswurffeder (30) aufweist, die dazu bestimmt ist, bei der Schließung der Zange von der zweiten Backe gespannt zu werden.

9. Kombinationswerkzeug nach Anspruch 5,
dadurch gekennzeichnet, daß
das Steuerorgan (22) durch eine Feder gebildet wird.

10. Kombinationswerkzeug nach Anspruch 1,
dadurch gekennzeichnet, daß
das Steuerorgan (22) durch einen zwischen der Klinge (5b) und der Backe (18) der Zange (15) angelenkten Schwingarm (35) und eine zwischen der Backe (5a) und der Backe (16) der Zange verankerte Feder (36) gebildet ist, wobei der Schwingarm (35) und die Feder organisiert sind, um einen Umklappunkt zwischen der anliegenden und der versetzten Position der Zange zu definieren.

11. Kombinationswerkzeug nach Anspruch 1,
dadurch gekennzeichnet, daß
die Backe (16) eine Schraube zur Regelung der Länge des abzuisolierenden Kabels aufweist.

12. Kombinationswerkzeug nach Anspruch 1,
dadurch gekennzeichnet, daß
die Zange (15) umfaßt:
- eine Backe (16₁), die an der Achse (17) montiert und an der Klinge (5a) über eine Abstandsregeleinrichtung (40) befestigt ist,
- eine Backe (18₁), die mit dem Steuerorgan (22) verbunden ist und über einen Zapfen (42) gelenkig an einer Seitenplatte (43) montiert ist, die an der Achse (17) montiert ist und der Wirkung einer Feder (44) unterworfen ist, die diese in diejenige Richtung schwenkt, in der die Backe (18₁) gegen die Backe (16₁) gedrückt wird.

13. Kombinationswerkzeug nach Anspruch 12,
dadurch gekennzeichnet, daß
die Backe (18₁) hinter ihre Schneidkante zurückspringend eine Klemmbacke (45) umfaßt, die sich parallel zu einer von der Platte (43) getragenen Gegenklemmbacke (46) erstreckt.

## Claims

1. Combined tool for cutting and stripping the ends of electrical cables covered with an insulating sheath, of the type comprising a wire cutter (1) constituted by two levers (2a, 2b) forming, on either side of a common pivot pin (3), two gripping and actuation handles (4a, 4b) and two blades (5a, 5b) presenting two opposite cutting edges (6a, 6b) constituting shears,
characterized in that:
- at least one of the levers comprises, at its end and parallel to its cutting edge, a counter-jaw (11) retractably mounted against the action of an elastic return member (13) limiting pressure, behind the cutting edge of said blade,
- the second lever is associated, laterally, on its outer face, with a tool (15) for cutting and stripping the sheath of a cable, said tool comprising two jaws (16, 18) which are articulated on each other and on said lever, disposed laterally and externally and associated with a control member (22) anchored on the first lever and adapted to provoke, during closure of the levers, firstly their own partial closure to cut the sheath then their lateral outward offset in order to extract the cable from the cut and gripped sheath part.

2. Combined tool according to claim 1, characterized in that the cutting and stripping tool (15) is mounted on the outer face (5a₁)of the lever (2a) by a pivot pin (17) perpendicular to the cutting edge (6a) of the blade of said lever.

3. Combined tool according to claim 2, characterized in that the pivot pin (17) is located beyond the common pivot (3) for articulation with respect to the cutting edge.

4. Combined tool according to claim 1, characterized in that the jaws of the cutting and stripping tool (15) comprise opposite rebated cutting edges (20, 21).

5. Combined tool according to claim 1, characterized in that the cutting and stripping tool (15) comprises:
- a first jaw (16) mounted by the pivot pin (17) on the lever,
- a second jaw (18) articulated on the first jaw by a pivot (19),
- a control member (22) anchored on the second lever and on the second jaw and urging, in position of opening of the levers of the tool, the first jaw into alignment with the lever bearing it and the second jaw into opening with respect to the first.

6. Combined tool according to claim 4 or 5, characterized in that the jaws of the stripping tool comprise cutting edges bordered by stripping stops (24, 25) offset with respect to these edges.

7. Combined tool according to claim 1, characterized in that the return spring (13) holds the counter-jaw, in a non-retracted state, against a stop (14) of the second lever.

8. Combined tool according to claim 5, characterized in that the first jaw (16) of the cutting and stripping tool (15) comprises an ejector spring (30) adapted to be placed under strain by the second jaw during closure of said tool.

9. Combined tool according to claim 5, characterized in that the control member (22) is constituted by a spring.

10. Combined tool according to claim 1, characterized in that the control member (22) is constituted by a small rod (35) articulated between the blade (5b) and the jaw (18) of the tool (15) and by a spring (36) anchored between the blade (5a) and the jaw (16) of the tool, the small rod (35) and the spring being arranged to define a point of tipping between the position applied and the offset position of the tool.

11. Combined tool according to claim 1, characterized in that the jaw (16) bears a screw for adjusting the length of the cable to be stripped.

12. Combined tool according to claim 1, characterized in that the tool (15) comprises:
- a jaw (16₁) mounted on the pin (17) and fixed to the blade (5a) by a device (40) for adjusting distance,
- a jaw (18₁) connected to the control member (22) and pivotally mounted by a pivot (42) on a lateral plate (43) mounted on the pin (17) and subjected to the action of a spring (44) causing it to pivot in the direction where the jaw (18₁) is applied against the jaw (16₁).

13. Combined tool according to claim 12, characterized in that the jaw (18₁) comprises, standing back from its cutting edge, a jaw (45) extending parallel to a counter-jaw (46) borne by the plate (43).
